# EUROPEAN PATENT SPECIFICATION

(11) **EP 1 927 285 B1**
(45) Date of publication and mention of the grant of the patent: **04.11.2009**
(21) Application number: 07121726.9
(22) Date of filing: 28.11.2007
(51) Int. Cl.: A01K 87/00

(54) **Joint type fishing rod**
Angelrute mit Steckverbindung
Canne à pêche de type joint

(30) Priority: 29.11.2006 JP 2006321005
(43) Date of publication of application: 04.06.2008
(73) Proprietor: DAIWA SEIKO, INC., Higashi Kurume-shi Tokyo (JP)
(72) Inventor: Usuda, Toshikazu, Higashikurume-shi Tokyo (JP)
(74) Representative: Brunner, Michael John

(56) References cited:
- EP-A- 1 183 945
- EP-A- 1 256 273
- EP-A- 1 872 656
- FR-A- 2 284 281
- JP-A- 9 084 496
- US-A- 3 862 509

## Description

### BACKGROUND OF THE INVENTION

The present invention relates to a long joint type fishing rod used mainly in a fishing competition and referred to as a pole rod or a bottom rod.

In a fishing competition using a joint type fishing rod referred to as a pole rod, a fishing rod is generally provided with a length equal to or longer than 12m and is set to be jointed together to be long by around 15m, however, the fishing rod is devised to catch a number of fishes in a constant period of time by shortening a length of a fish line to about 2 through 3m.

When a fish is hooked by a fish hook connected to the fish line, since the fish line is short, a load of the hooked fish is immediately applied to a rod tip and a very large load is operated to a hand of an angler since the fishing rod is long. In order to avoid the load, there is arranged a string-like member (so-to-speak rubber string) having a length of being inserted from a position, of an inner position of any rod pipe of a second through a fourth one counted from a top rod, to a distal end of the top rod and exposed to an outer portion from the distal end of the top rod. The string like member is made of silicone or made of rubber and has a size of a diameter of about 0.5mm through 2mm, and the fish line is connectedto a front side thereof. The string-like member is referred to as an elastic. By presence thereof, when a fish is hooked, the load is absorbed by also elongating the elastic, and therefore, the load applied on the rod can considerably be reduced.

Although the hooked fish escapes around by pulling to extend the elastic, the fish is immediately fatigued and is dragged to be proximate to the rod tip side by an elastic operation of the elastic. The rod pipe of the joint type fishing rod is of a normal joint type, a reverse joint type, or a faucet joint type and is not of a telescopic type (however, a top rod (first rod) and a top holding rod (second rod) may be jointed by the telescopic type), and therefore, the rod pipes can be extracted from the rod pipe on the hand side successively to a rear side, and the fishing rod can successively be shortened. When the fish is hooked, while fighting with the fish, the fishing rod is shortened by successively drawing away the rod pipes from the hand side pipe. In this way, a length of the fishing rod is made to a degree the same as that of the length of the fish line, that is, a short joint fishing rod comprising about 3 pieces thereof.

An example of a joint type fishing rod used in such a competition is disclosed in a JP-A-2002-330677.

However, the elastic is inserted through inner portions of several pieces of the rod pipes and is further exposed by a length to some degree also from the distal end of the fishing rod and is provided with a predetermined length. Therefore, the elastic is further elongated when the fish is taken in and the hooked fish cannot be necessarily swiftly taken in.

EP 1,872,656, which comprises part of the state of the art under Art. 54(3) EPC, discloses a joint type fishing rod formed of jointed pipes of fiber reinforced resin. A through hole for inserting a string-like elastic is formed through a side surface of the second or third rod pipes.

EP 1,256,273 discloses a joint type fishing rod formed of jointed pipes of fiber reinforced resin. An elastic guide line extends from a point internal of the rod, through the interior of the distal pipes, to the distal end, where it is attached to a fishing device.

US 3,862,509 discloses a hollow, telescopic fishing rod in which the fishing line extends through the interior from the distal end to an aperture at the proximal end for attachment to a reel.

### SUMMARY OF THE INVENTION

Therefore, a problem to be resolved is to provide a joint type fishing rod having a structure of capable of reducing an amount of elongating an elastic as less as possible when a fish is taken in.

In order to solve the above problem, the present invention is characterized by having the following arrangement.

A joint type fishing rod comprising at least 5 pieces of hollow rod pipes including a first top rod pipe (R1), a second rod pipe (R2), a butt rod pipe (R11) and other rod pipes (R3, R4, R8, R9, R10), which are made of a fiber reinforced resin in which a synthetic resin is employed as a matrix and reinforced by a reinforcing fiber and which are capable of being jointed together,
wherein joint portions between the rod pipes (R3-R11) are jointed together by a joint type other than a telescopic type, with the possible exception of a joint portion between the first top rod pipe (R1) and the second rod pipe (R2), and
wherein a through hole for inserting a string-like elastic is formed through a side surface of any of the second rod pipe (R2) and the other rod pipes (R3, R4, R8, R9, R10), and
wherein a pipe member in a L-like shape is mounted to the through hole for allowing the string-like elastic to pass through.

Optionally, rod pipe (R3) including the through hole is the rod pipe disposed on a front side of a third of a total length of the fishing rod and is the second, third or fourth rod pipe counted from the first top rod pipe, and the through hole is provided at a region except a joint portion of a rear portion of the rod pipe provided with the through hole and within a range of 60cm, preferably from 30cm to 40cm, from a rear end of the rod pipe.

Optionally, a hole edge member is provided at the through hole to cover a hole edge of the through hole. The hole edge member may be made of ceramic, synethetic resin or hard rubber.

Optionally, two through holes are formed through the side surface of the rod pipe.

According to the first aspect of the invention, the through hole is provided at the side face of any of the rod pipes, and therefore, it is possible that the elastic is inserted from the top rod over to an inner portion of the rod pipe and one end portion or a middle portion of the elastic inserted to an inner portion of the fishing rod by way of the through hole can be extracted to outside. When a fish is taken in, an angler can pull to shorten the elastic portion coming out from a distal end of the top rod to outside by pulling the elastic portion pulled out to outside, and can swiftly take in the fish by reducing a possible elongation of a total of the elastic by restraining an elongation of a portion inserted to the inner portion of the rod pipe.

According to the second aspect of the invention, in the joint type fishing rod for competition, as described above, a fish line is considerably shorter than a total length of the fishing rod, normally, corresponds to a length of about 4 pieces of the rod pipes from a distal end of the rod including the top rod. Therefore, it is convenient for taking in the fish after shortening the joint type fishing rod to about 3 pieces thereof. That is, when the through hole is provided at the rod pipe disposed on a front side of a third of a total length of the fishing rod and a second or a third or a fourth rod pipe counted from the top rod, the joint type fishing rod is shortened to a length of constituting the rearmost rod pipe by the rod pipe provided with the through hole, and the top pipe is gripped, and the elastic portion exposed to outside is extracted by the finger of the hand which does not grip the rod pipe to pick up the portion, an elongation of the remaining elastic portion can be reduced and the fish is made to be easy to be taken in. Further, when the through hole is provided at the region excluding the joint portion of the rear portion of the rod pipe and within the range of 60cm from the rear end of the rod pipe, the through hole is disposed at the vicinity of the hand gripping the fishing rod, and therefore, it is extremely facilitated to operate to extract the elastic by the other hand.

### BRIEF DESCRIPTION OF THE DRAWINGS

Fig.1 is a total view of a joint type fishing rod (pole rod) according to the invention.
Fig.2 is a view of a state of shortening the joint type fishing rod of Fig.1 and a state of arranging an elastic.
Fig.3 is a sectional view enlarging an example of a mode at a vicinity of a through hole of Fig.2.
Fig.4 is a sectional view enlarging an example of other mode at a vicinity of a through hole.
Fig. 5 is an example of providing 2 pieces of through holes.

### DETAILED DESCRIPTION OF PREFERRED EMBODIMENTS

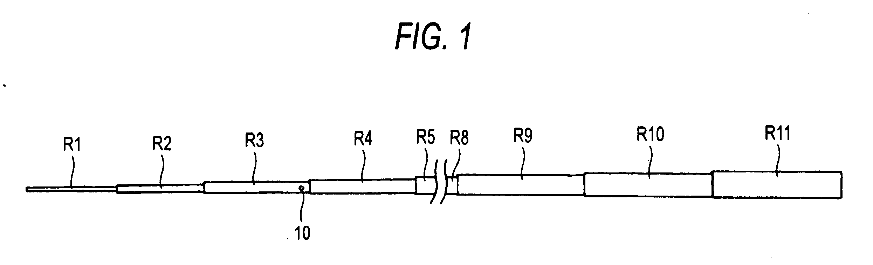

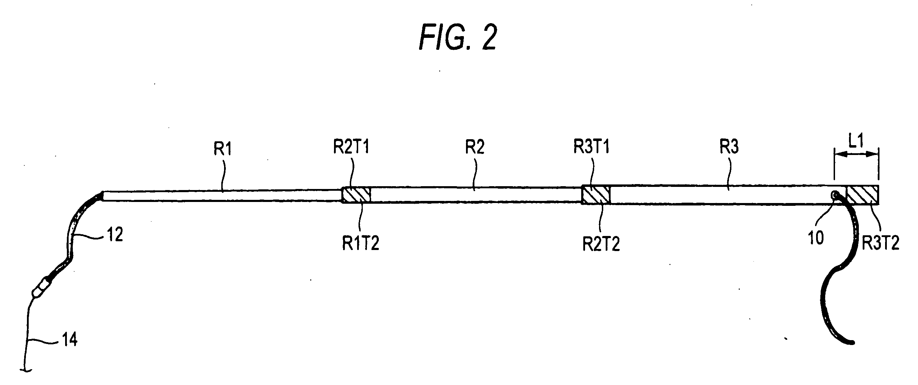

The invention will be described in details with reference to the drawings as follows. Fig.1 is a total view of a pole rod according to the invention. Although in this example, 11 pieces of hollow rod pipes R1, R2, ···, R11 are jointed together by a normal joint type, the hollow rod pipes R1 and R2 may be jointed together by a telescopic type. With reference to Fig. 2, a joint portion R1T2 of a rear portion of the top rod R1 is fitted to inside of a joint portion R2T2 of a front portion of the second rod pipe R2, and a joint portion R2T2 of a rear portion of the second rod pipe R2 is fitted to inside of a joint portion R3T1 of a front portion of the third rod pipe R3. A through hole 10 is formed at a side surface of a region of the third rod pipe at a front side position proximate to a joint portion R3T2 of a rear portion of the third rod pipe R3. A total length of the joint fishing rod of the example is 15m, and the through hole 10 is disposed within at least 5m from the distal end of the fishing rod (a third of the total length). Further, the respective rod pipes are made of a fiber reinforced resin in which a synthetic resin is employed as a matrix and reinforced by a reinforcing fiber, thereby the respective rod pipes are light-weighted.

In an actual fishing competition, as shown by Fig.2, an elastic 12 similar to that of the background art mentioned above is inserted. That is, according to the example, the elastic 12 is made to pass to inside of the third rod pipe R3 through the through hole 10, and a front side of the elastic is inserted to the second rod pipe R2 and the top rod R1 and is extracted to an outer portion from the distal end of the top rod. A distal end thereof is connected with a fish line 14. On the other hand, other end side is extracted to an outer side of the through hole 10. A stopper member, not illustrated, may be provided at an end portion of the plastic such that the other end side of the elastic is erroneously not pulled into the third rod pipe R3.

A position of the through hole 10 is provided at a rod pipe on the most hand side of the joint fishing rod in a state that the joint fishing rod is shortened to a length of about a length of the fish line 14. In this example, the hand side rod pipe is the third rod pipe R3. Depending on lengths of the respective rod pipes of the joint fishing rod, there is a case in which the hand side rod pipe is the second rod pipe, and there can be a case that the hand side rod pipe is a fourth rod pipe. Further, as to a position of the through hole 10 at the hand side rod pipe, a rear portion thereof is preferable. This is because an angler fights with a fish by gripping the rear portion. However, even in the rear portion, the joint portion is excluded. That is, the through hole is provided at a region excluding the joint portion R3T2 of the rear portion of the third rod pipe R3.

Specifically, the through hole 10 is provided within a range of a distance L1 from a rear end of the rod pipe R3. The distance L1 is preferably within 60cm. In that range, an operation of gripping the rod pipe R3 by the one hand and picking to pull out an exposed portion of the elastic 12 by the other hand is facilitated. When the elastic 12 is extracted as long as possible from the through hole 10 and a portion of the elastic proximate to the through hole is picked up, an amount of being extended by pulling by the fish is minimized. Therefore, the fish can swiftly be taken in.

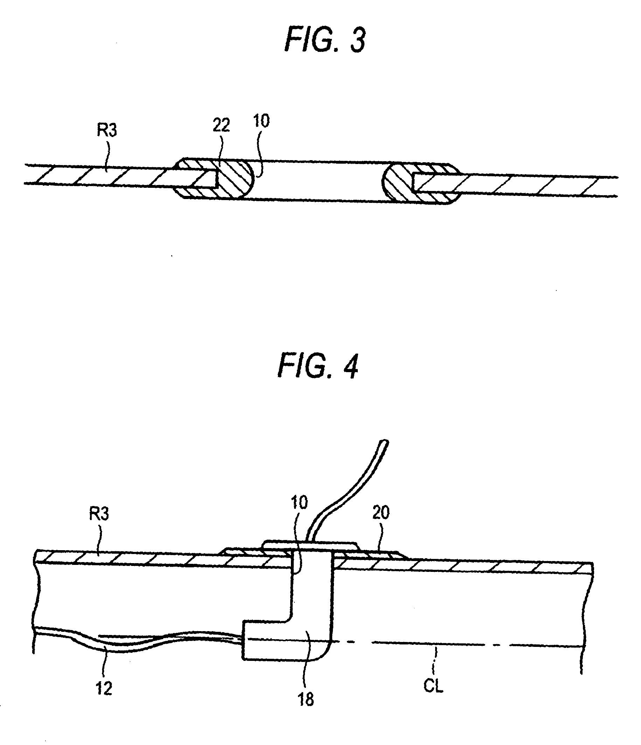

Although the elastic 12 may directly be inserted to the through hole bored at the side face of the rod pipe R3, as shown in Fig. 3, a hole edge member 22 made of ceramic, synthetic resin or hard rubber may be provided at the through hole 10 to cover a hole edge of the through hole, thereby the elastic 12 can be protected against wear. Further, as shown in Fig. 4, a pipe member 18 in an L-like shape is mounted to the through hole 10 for allowing the elastic to pass through. One side portion of the L character of the pipe member is directed in parallel with the rod pipe R3, and when a center axis line of the one side portion is made to coincide with a center axis line of the rod pipe R3, the elastic 12 is difficult to be rubbed by an inner wall of the rod pipe R3 and an operation of extracting the elastic 12 is smoothly carried out, which is preferable.

Further, a fishing rod is operated with a large bending force, and therefore, when the rod pipe is provided with the through hole 10, a concern of destructing the fishing rod therefrom becomes high. Hence, it is preferable to mold the rod pipe by providing a reinforcing layer 20 for reinforcing a periphery of the through hole by using woven cloth intersected with a reinforcing fiber or bias prepreg.

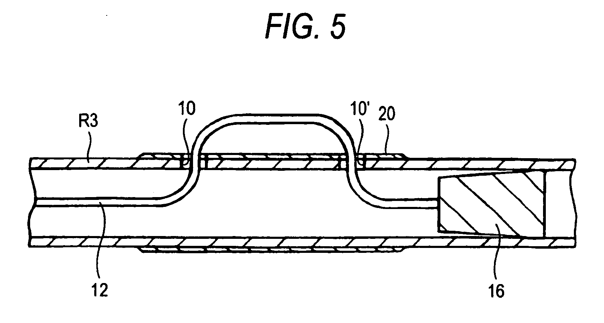

In Fig.5, 2 through holes are provided, and not an end portion but a middle portion of the elastic 12 is exposed to outside through the through hole 10 on the front side and a through hole 10' on the rear side. A reference numeral 16 designates a stopper member made of a rubber material or the like for holding a rear end portion of the elastic 12. When the elastic is inserted from a rear end of the rod pipe (R3), the stopper member is provided with a diameter dimension capable of being held at a vicinity of the rear end. An operation of extracting the elastic 12 in this case can be carried out by catching the portion exposed to outside of the rod pipe by the finger and there is not a concern that a total of the elastic 12 is pulled into the rod pipe R3. Also in this case, it is preferable to provide hole edges of the respective through holes with the hole edge members 22 as shown by Fig.3.

The invention can be utilized for the joint type fishing rod referred to as pole rod.

## Claims

1. A joint type fishing rod comprising at least 5 pieces of hollow rod pipes including a first top rod pipe (R1), a second rod pipe (R2), a butt rod pipe (R11) and other rod pipes (R3, R4, R8, R9, R10), which are made of a fiber reinforced resin in which a synthetic resin is employed as a matrix and reinforced by a reinforcing fiber and which are capable of being jointed together,
wherein joint portions between the rod pipes (R3-R11) are jointed together by a joint type other than a telescopic type, with the possible exception of a joint portion between the first top rod pipe (R1) and the second rod pipe (R2),
wherein a through hole (10; 10') for inserting a string-like elastic (12) is formed through a side surface of any of the second rod pipe (R2) and the other rod pipes (R3, R4, R8, R9, R10), and
wherein a pipe member (18) in a L-like shape is mounted to the through hole for allowing the string-like elastic (12) to pass through.

2. The joint type fishing rod according to claim 1, wherein the rod pipe (R3) including the through hole (10; 10') is the rod pipe disposed on a front side of a third of a total length of the fishing rod and is the second, third or fourth rod pipe counted from the first top rod pipe, and the through hole is provided at a region except a joint portion of a rear portion of the rod pipe provided with the through hole and within a range of 60cm from a rear end of the rod pipe.

3. The joint type fishing rod according to claim 1, wherein a hole edge member is provided at the through hole to cover a hole edge of the through hole.

4. The joint type fishing rod according to claim 3, wherein the hole edge member (22) is made of ceramic, synthetic resin or hard rubber.

5. The joint type fishing rod according to claim 1, wherein two through holes (10,10') are formed through the side surface of the rod pipe.

## Patentansprüche

1. Angelrute zum Zusammenfügen, umfassend mindestens fünf Stück hohler Stangenrohre einschließlich eines ersten Kopfstangenrohrs (R1), eines zweiten Stangenrohrs (R2), eines Endstangenrohrs (R11) und anderer Stangenrohre (R3, R4, R8, R9, R10), die aus einem faserverstärkten Harz hergestellt sind, in dem ein synthetisches Harz als Matrix eingesetzt und durch eine Verstärkungsfaser verstärkt wird, und die zusammenfügbar sind,
wobei Zusammenfügungsabschnitte zwischen der Stangenrohren (R3-R11) durch eine andere Zusammenfügungsart als eine Teleskopart zusammengefügt sind, mit der möglichen Ausnahme eines Zusammenfügungsabschnitts zwischen dem ersten Kopfstangenrohr (R1) und dem zweiten Stangenrohr (R2),
wobei ein Durchgangsloch (10; 10') zum Einführen eines schnurartigen elastischen Elements (12) durch eine Seitenfläche entweder des zweiten Stangenrohrs (R2) oder der anderen Stangenrohre (R3, R4, R8, R9, R10) gebildet ist, und
wobei ein Rohrelement (18) in einer L-artigen Form an dem Durchgangsloch angebracht ist, um zu ermöglichen, dass das schnurartige elastische Element (12) hindurchtritt.

2. Angelrute zum Zusammenfügen nach Anspruch 1, wobei das Stangenrohr (R3) umfassend das Durchgangsloch (10; 10') das Stangenrohr ist, das sich an einer Vorderseite eines Drittels der Gesamtlänge der Angelrute befindet und das zweite, dritte oder vierte Stangenrohr ist, gezählt von dem ersten Kopfstangenrohr, und wobei das Durchgangsloch in einem Bereich außer einem Zusammenfügungsabschnitt eines hinteren Abschnitts des Stangenrohrs, das mit dem Durchgangsloch versehen ist, und innerhalb eines Bereichs von 60cm von einem hinteren Ende des Stangenrohrs vorgesehen ist.

3. Angelrute zum Zusammenfügen nach Anspruch 1, wobei ein Lochrandelement an dem Durchgangsloch vorgesehen ist, um einen Lochrand des Durchgangslochs zu bedecken.

4. Angelrute zum Zusammenfügen nach Anspruch 3, wobei das Lochrandelement (22) aus Keramik, Kunstharz oder Hartgummi hergestellt ist.

5. Angelrute zum Zusammenfügen nach Anspruch 1, wobei zwei Durchgangslöcher (10, 10') durch die Seitenfläche des Stangenrohrs gebildet sind.

## Revendications

1. Canne à pêche de type à joint comprenant au moins 5 pièces de tubes de canne creux comprenant un premier tube de canne supérieur (R1), un deuxième tube de canne (R2), un tube de canne de butée (R11) et d'autres tubes de canne (R3, R4, R8, R9, R10), qui sont réalisés avec une résine renforcée en fibre dans laquelle une résine synthétique est utilisée en tant que matrice et renforcée par une fibre de renforcement et peuvent être assemblés,
dans laquelle les parties de joint entre les tubes de canne (R3 - R11) sont assemblées par un type de joint différent d'un joint télescopique, avec l'exception possible d'une partie de joint entre le premier tube de canne supérieur (R1) et le second tube de canne (R2),
dans laquelle un trou de passage (10 ; 10') pour insérer un élastique en forme de ficelle (12) est formé à travers une surface latérale de l'un quelconque parmi le second tube de canne (R2) et les autres tubes de canne (R3, R4, R8, R9, R10), et
dans laquelle un élément de tube (18) en forme de L est monté sur le trou de passage pour permettre à l'élastique en forme de ficelle (12) de passer à travers.

2. Canne à pêche de type à joint selon la revendication 1, dans laquelle le tube de canne (R3) comprenant le trou de passage (10 ; 10') est le tube de canne disposé sur un côté avant d'un tiers d'une longueur totale de la canne à pêche et est le deuxième, le troisième ou le quatrième tube de canne compté à partir du premier tube de canne supérieur, et le trou de passage est prévu dans une région excepté une partie de joint d'une partie arrière du tube de canne prévu avec le trou de passage et dans une plage de 60 cm à partir d'une extrémité arrière du tube de canne.

3. Canne à pêche de type à joint selon la revendication 1, dans laquelle un élément de bord de trou est prévu au niveau du trou de passage pour recouvrir un bord de trou du trou de passage.

4. Canne à pêche de type à joint selon la revendication 3, dans laquelle l'élément de bord de trou (22) est réalisé à partir de céramique, de résine synthétique ou de caoutchouc dur.

5. Canne à pêche de type à joint selon la revendication 1, dans laquelle deux trous de passage (10, 10') sont formés à travers la surface latérale du tube de canne.
